(19) Europäisches Patentamt

European Patent Office

Office européen des brevets

(11) **EP 1 168 866 A1**

(12) # DEMANDE DE BREVET EUROPEEN

(43) Date de publication:
**02.01.2002 Bulletin 2002/01**

(51) Int Cl.$^7$: **H04Q 7/34**, H04M 3/36

(21) Numéro de dépôt: **01401494.8**

(22) Date de dépôt: **11.06.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **26.06.2000 FR 0008154**

(71) Demandeur: **ALCATEL**
**75008 Paris (FR)**

(72) Inventeur: **Randriamasy, Claire-Sabine**
**92190 Meudon (FR)**

(74) Mandataire: **Sciaux, Edmond et al**
**COMPAGNIE FINANCIERE ALCATEL Dépt. Propr. Industrielle, 30, avenue Kléber**
**75116 Paris (FR)**

(54) **Procédé d'obtention d'une représentation géographique du trafic dans un reseau de radio communication mobile**

(57) Procédé pour construire une représentation de la répartition géographique du trafic pour un réseau cellulaire de radiocommunication, caractérisé en ce qu'il comporte des étapes visant à :

• Diviser chaque cellule ($C_1$) du réseau en un ensemble de zones ($z_1$, $z_2$, $z_{3...}$ $z_9$), à l'aide d'informations sur les basculements provenant du réseau cellulaire,

• Déterminer une valeur de trafic pour chacune de ces zones,

• Déterminer une représentation de la répartition géographique du trafic à partir de ces valeurs de trafic.

FIG_4

**Description**

La présente invention concerne un procédé d'obtention d'une représentation géographique du trafic associé à un réseau de radiocommunication mobile de type cellulaire. Elle s'applique particulièrement bien aux réseaux conformes aux normes GSM ou équivalents.

Plus précisément, l'invention a pour but de déterminer, de façon précise, une correspondance entre les points du terrain sur lequel est déployé le réseau de radiocommunication, et le trafic en termes de communication entre les terminaux mobiles de télécommunication, et les stations de base.

La connaissance de cette correspondance permet à un opérateur de télécommunication de repérer les zones dont le trafic est trop important compte tenu des ressources (notamment stations de base) déployées et d'envisager des actions correctrices pertinentes.

Les solutions existantes dans l'état de la technique permettent d'associer à chaque cellule, une valeur de trafic.

On rappelle qu'une cellule est une étendue géographique dans laquelle tous (ou sensiblement tous) les terminaux mobiles sont connectés à une même station de base. Lorsqu'un terminal mobile se déplace, la communication établie avec une station de base peut se dégrader de sorte qu'il soit amené à établir une nouvelle communication avec une autre station de base, et donc à changer de cellule. On appelle généralement ce mécanisme, basculement ou bien handover selon la terminologie de langue anglaise.

À titre d'exemple de cet état de la technique, on peut citer le logiciel Parcell de la société Telemate.

Toutefois une telle solution n'est pas satisfaisante. En effet, les cellules sont généralement de dimension assez importante. La précision est donc assez faible, et la connaissance de la valeur du trafic pour une cellule donnée est, dans le cas général, peu représentative de la réalité.

Par exemple, en contexte urbain, la taille d'une cellule est d'environ 300m par 300 m. Une telle zone est susceptible d'englober à la fois des zones de fort trafic (centre commercial ou industriel...) et de faible trafic (parc, zone résidentielle...). Dans ce cas, la valeur du trafic sera une moyenne des valeurs de trafic sur les zones de fort trafic et sur les zones de faible trafic. Conséquemment, même si la valeur du trafic sur une des zones de fort trafic est extrêmement importante et nécessiterait une action correctrice (ajout d'une station de base pour division de la cellule en deux cellules, par exemple), la valeur de trafic sur la cellule peut être tout à fait normale. Aucune alarme ne pourra donc être générée, et, *a fortiori,* aucune action correctrice.

Il est par conséquent très important d'obtenir une représentation du trafic qui soit plus précise que la cellule.

La présente invention a pour but d'obtenir une telle représentation. Pour ce faire, elle a pour objet un procédé pour construire une représentation de la répartition géographique du trafic pour un réseau cellulaire de radiocommunication. Ce procédé se caractérise en ce qu'il comporte des étapes visant à :

- Diviser chaque cellule du réseau en un ensemble de zones, à l'aide d'informations sur les basculements provenant du réseau cellulaire,
- Déterminer une valeur de trafic pour chacune de ces zones,
- Déterminer une représentation de la répartition géographique du trafic à partir des valeurs de trafic précédemment calculées.

L'invention et ses avantages vont apparaître de façon plus claire dans la description qui va suivre, en liaison avec les figures jointes.

La figure 1 illustre le dispositif permettant de mettre en oeuvre le procédé de l'invention.
La figure 2 est un organigramme représentant l'enchaînement des étapes du procédé selon l'invention.
Les figures 3 et 4 illustrent différentes étapes du procédé au moyen d'un exemple de voisinage d'une cellule.

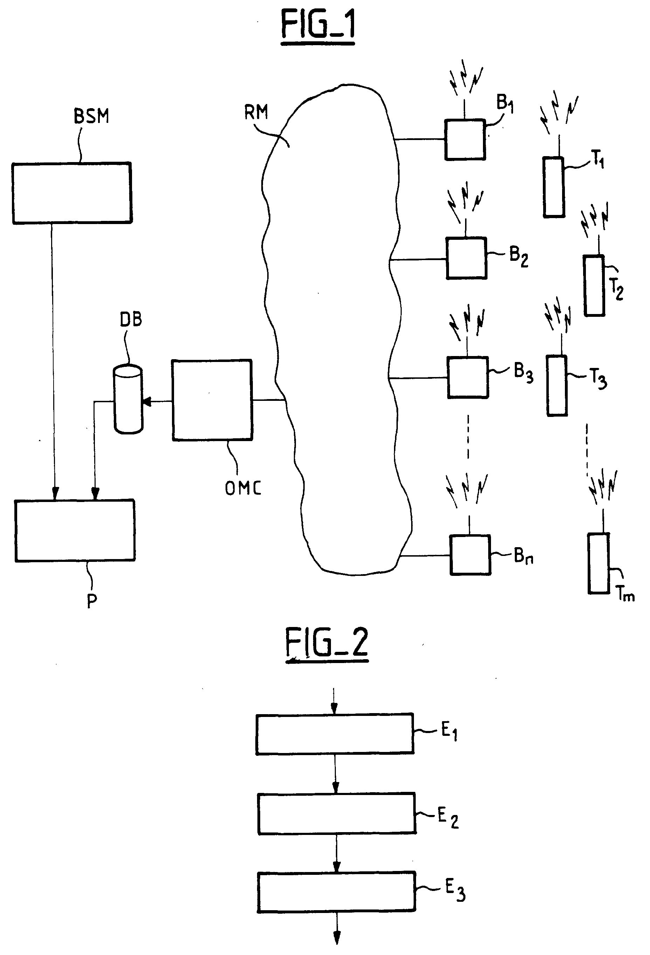

La figure 1 représente le dispositif permettant de mettre en oeuvre le procédé de l'invention. Ce dispositif comporte un réseau de télécommunication mobile RM, comportant un ensemble de stations de base $B_1$, $B_2$, $B_3$... $B_n$ comportant des moyens pour communiquer par ondes électromagnétiques avec un ensemble de terminaux mobiles $T_1$, $T_2$, $T_3$... $T_m$.

Ce réseau de télécommunication mobile RM est connecté à un ou plusieurs système de gestion OMC (pour *Operation and Maintenance Center*) tel que défini par la norme GSM 12.00. Ces systèmes de gestion OMC permettent la supervision locale des équipements du réseau de télécommunication mobile. Ils forment une partie du réseau de gestion des télécommunications RGT (non représenté sur la figure) ou TMN pour *Telecommunication Management Network,* en langue anglaise. Les fonctions des RGT et des OMC sont classiquement divisées en 5 groupes :

- La gestion des pannes survenant sur les divers équipements du réseau de télécommunication mobile,
- La gestion de la configuration,

- La gestion des performances,
- La gestion de la tarification des communications, et,
- La gestion de la sécurité.

Pour ce faire, ils ont accès à des informations relatives à ces équipements et notamment aux stations de base $B_1$, $B_2$, $B_3$... $B_n$.

Ces informations sont appelées par la suite indicateurs et sont définies pour partie par la norme GSM 12.04. Cette norme ne définit que des indicateurs de niveau assez bas. La plupart des constructeurs ajoutent à ces indicateurs normalisés d'autres indicateurs, qui sont souvent obtenus par combinaison d'indicateurs de la norme GSM.

À titre d'exemple, on peut citer comme indicateurs :

- Un indicateur qui représente le temps d'occupation du canal,
- Un indicateur qui représente les tentatives d'appel (qui peut être considéré comme un estimateur du trafic),
- Un indicateur représentant le nombre de basculements (ou handovers en langue anglaise) entrants, et,
- Un indicateur qui représente le nombre de basculements sortants.

Dans la suite, on distinguera les basculements entrants et les basculements sortants.

Un basculement sortant a lieu dans une première cellule, lorsqu'un terminal mobile établit une nouvelle connexion avec la station de base d'une deuxième cellule. Un basculement entrant a lieu dans cette première cellule dans le cas inverse, c'est-à-dire lorsqu'un terminal mobile établit une nouvelle connexion avec la station de base de cette première cellule. Autrement dit, lorsqu'un un terminal mobile passe d'une première cellule à une seconde cellule (basculement), il y a un basculement sortant dans la première cellule et un basculement entrant dans la seconde cellule.

Le dispositif représenté comporte en outre une base de données DB permettant de mémoriser les données issues du système de gestion OMC. Cette base de données permet de conserver les informations relatives aux équipements du réseau de télécommunication mobile, sur une longue durée, par exemple sur plusieurs mois. Ceci permet d'avoir une vision du comportement du réseau de télécommunication mobile RM sur une longue période, et donc d'être indépendant de phénomènes épisodiques pouvant frapper le réseau.

Par ailleurs, le dispositif illustré par la figure 1 comporte un serveur BSM mettant à disposition une ou plusieurs cartes de meilleur serveur. Ces cartes sont généralement créées et utilisées lors de la planification du réseau de télécommunication cellulaire. Elles mettent en correspondance des points d'une zone géographique avec la station de base avec laquelle un terminal mobile situé à cet endroit aura la probabilité la plus élevée de se connecter.

Elles se basent sur des modélisations de la zone géographique et des conditions de propagation des ondes électromagnétiques et permettent d'avoir une connaissance théorique de l'étendue géographique des cellules.

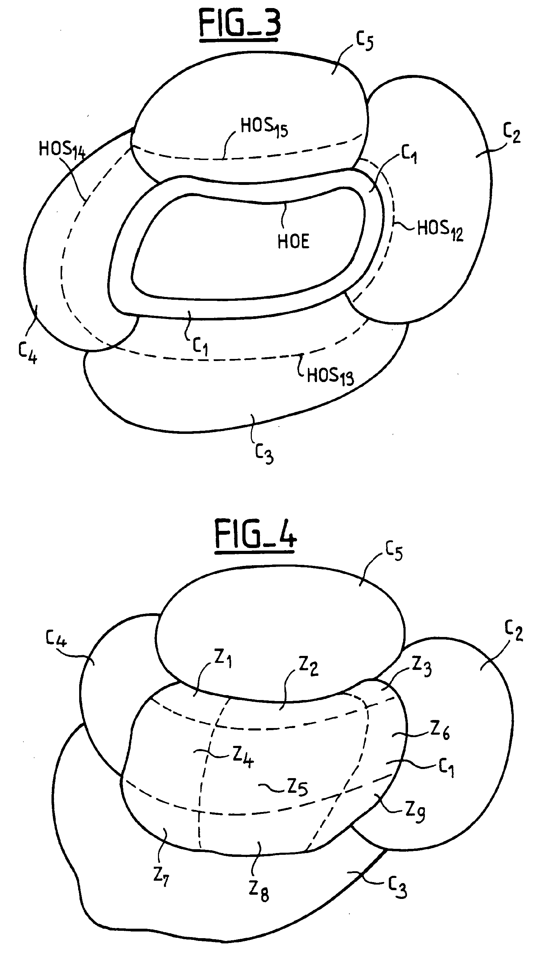

La figure 2 schématise, à l'aide d'un organigramme, le procédé mis en oeuvre par l'outil de planification P.

La première étape, référencée $E_1$ sur la figure 2, consiste à diviser les cellules en sous-cellules. Cette division est effectuée en utilisant des informations relatives aux basculements, provenant du système de gestion OMC et qui sont stockées dans la base de données DB.

La première sous-étape consiste à calculer les frontières des basculements entrants. Cette étape est habituellement une étape de la construction des cartes de meilleurs serveurs. La frontière des basculements entrants peut donc être rendue disponible par le serveur BSM.

À titre informatif, on peut noter qu'une cellule de la carte de meilleurs serveurs est constituée de points de l'espace pour lesquels la puissance du signal reçu par un mobile d'une station de base ($B_1$, $B_2$, $B_3$... $B_n$) est supérieure à celle reçue des autres stations de base du réseau.

Toutefois, cette puissance n'est pas constante au sein d'une cellule. Notamment, aux abords des frontières de la cellule, cette puissance peut être assez faible. On définit alors la frontière des basculements entrants comme étant le lieu des points pour lesquels cette puissance est supérieure à un certain seuil.

On calcule ensuite, à partir de cette frontière des basculements entrants, une frontière des basculements sortants. Cette frontière des basculements sortants peut être déterminée comme étant la courbe située à une distance d de la frontière des basculements entrants, cette distance d étant calculée comme étant le produit de la vitesse moyenne, sur une cellule, des terminaux mobiles par leur temps d'occupation du canal. Il faut noter que cette distance d est différente pour chaque cellule.

Le temps d'occupation du canal peut être directement fourni par un indicateur donné par le système de gestion OMC.

La vitesse moyenne des terminaux mobiles est un paramètre du procédé. Il peut être déterminé une fois pour toutes ou bien déterminé à chaque utilisation du procédé selon l'invention.

La figure 3 illustre ce calcul de frontières de basculements sortants. La cellule $C_1$ possède des cellules voisines $C_2$, $C_3$, $C_3$, $C_4$ et $C_5$. Le système de gestion OMC fournit la frontière des basculements entrants HOE. Comme indiqué précédemment, on peut alors calculer la frontière des basculements sortants HOS.

Cette frontière des basculements sortants HOS est localisée dans les cellules voisines $C_2$, $C_3$, $C_3$, $C_4$ et $C_5$ qu'elle divise en deux parties : une au deçà et une au delà.

L'étape suivante, référencée $E_2$ sur la figure 2, consiste à utiliser ces frontières de basculements sortants pour déterminer des zones à l'intérieur de chaque cellule.

De la même façon, on peut calculer des frontières de basculements sortants pour chacune des cellules voisines, ainsi qu'il est illustré par la figure 4.

Les lignes en pointillés $HOS_2$, $HOS_3$, $HOS_4$ et $HOS_5$ représentent les frontières de basculements sortants calculées respectivement pour les cellules $C_2$, $C_3$, $C_4$ et $C_5$.

Ces 4 frontières, correspondants aux 4 cellules adjacentes à la cellule $C_1$, divisent la cellule $C_1$ en 9 zones $z_1$, $z_2$, $z_3$, $z_4$, $z_5$, $z_6$, $z_7$, $z_8$ et $z_9$.

L'étape suivante, référencé $E_3$ sur la figure 2, consiste à déterminer une valeur de trafic associée à chaque zone.

Pour ce faire, le principe peut être de minimiser les différences entre les valeurs de trafic de deux zones adjacentes. On suppose, en effet, que le trafic est une fonction continue et qu'il ne doit pas y avoir de discontinuité du modèle.

Dans la suite, on note $\lambda_i$ la valeur de trafic pour la zone i. On peut alors exprimer ce principe sous la forme d'une fonction f à minimiser :

$$f(\lambda_1, \lambda_2, \lambda_3 \cdots \lambda_n) = \sum_{i=1}^{n} \nabla_i$$

dans laquelle n est le nombre de zones, et $\nabla_i$ la somme des différences entre la valeur de trafic de la zone numéro i et les valeurs de trafic de l'ensemble des zones qui lui sont adjacentes.

Cette expression peut prendre plusieurs formes.

Sous la forme quadratique on aura :

$$\nabla_i = \sum_{j \in V_i} \left( \lambda_i - \lambda_j \right)^2$$

avec $V_i$ l'ensemble des indices des zones adjacentes à la zone numéro i .

Cette valeur $\nabla_i$ peut aussi s'exprimer sous une forme linéaire :

$$\nabla_i = \sum_{j \in V_i} \left| \lambda_i - \lambda_j \right|$$

On peut aussi écrire deux contraintes que les valeurs de trafic $\lambda_1$, $\lambda_2$, $\lambda_3$... $\lambda_n$, doivent respecter:

- Le somme des valeurs de trafic des zones d'une cellule est égal à la valeur de trafic pour cette cellule.
- La somme des basculements estimés pour chaque zone d'une cellule est égal au nombre de basculement pour cette cellule.

La première contrainte peut s'écrire, pour chaque cellule i, selon l'expression suivante :

$$\sum_{k \in J(i)} \lambda_k = t_i$$

dans laquelle J(i) est l'ensemble des indices des zones appartenant à la cellule numérotée i, et $t_i$ est la valeur de trafic pour cette cellule numéro i. Cette valeur de trafic $t_i$ est connue par le système de gestion OMC.

La seconde contrainte permet d'écrire pour chaque couple de cellules $(C_i, C_j)$, l'expression suivante :

$$\alpha_1 \cdot \sum_{k \in J_1(i,j)} \lambda_k + \alpha_2 \cdot \sum_{k \in J_2(i,j)} \lambda_k = HO(i,j)$$

dans laquelle HO(i, j) représente le nombre de basculements (ou handovers en anglais) de la cellule numéro i vers la cellule numéro j.

Dans cette expression, on distingue deux types de zones contenues dans la cellule $C_i$ :

- d'une part les zones situées à proximité de la cellule $C_i$. Pour ces zones, on considère que la probabilité $\alpha_1$ qu'une communication subisse un basculement est relativement élevée. On note $J_1(i, j)$ l'ensemble de ces zones.
- d'autre part les autres zones de la cellule $C_j$. On considère, pour ces zones, que la probabilité $\alpha_2$ qu'une communication subisse un basculement est relativement faible. On note $J_2(i, j)$ l'ensemble de ces zones. On peut noter que $\forall i, j\ J_1(i,j) \cup J_2(i,j)=J(i)$, le symbole $\cup$ notant l'union de deux ensembles.

À titre d'exemple, si on considère la figure 4, et les basculements ayant lieu entre la cellule $C_1$ et la cellule $C_2$. On peut écrire l'équation de contrainte suivante :

$$\alpha_1.[\lambda_6+\lambda_9+\lambda_3]+\alpha_2.[\lambda_4+\lambda_5+\lambda_2+\lambda_7+\lambda_8+\lambda_1]=HO(1,2)$$

On obtient donc une fonction de n variables à minimiser sous $p \leq n$ contraintes. Il s'agit là d'un problème d'optimisation assez classique en soi, que l'on peut résoudre par des méthodes connues.

À titre d'exemple, on peut se référer à l'ouvrage « *Practical Methods of Optimization: constrained Optimization* », de R. Fletcher chez Wiley & Sons, 1981. Une mise en oeuvre préférentielle consiste à utiliser la forme quadratique du critère $f(\lambda_1, \lambda_2... \lambda_n)$ et de résoudre le problème par une méthode itérative, ce qui permet de produire des valeurs de trafic $\lambda_i$ toutes non nulles, conformément aux contraintes opérationnelles.

Les valeurs des probabilités $\alpha_1$ et $\alpha_2$ peuvent être déterminées de façon empirique, dans certains cas.

Toutefois, une mise en oeuvre préférentielle de l'invention consiste à calculer ces valeurs dans une étape de minimisation sous contraintes, simultanément aux autres variables.

En effet, dans la plupart des cas, on ne peut pas donner un couple $(\alpha_1, \alpha_2)$ qui ait une valeur constante sur le réseau. Il faut considérer un couple $[\alpha_1(i,j), \alpha_2(i,j)]$ pour chaque couple de cellules entre lesquelles il y a des basculements.

Il est donc plus pertinent pour la suite de l'exposé, de considérer la proportion Q entre les $\alpha_1$ et les $\alpha_2$, cette proportion étant donnée par :

$$\alpha_2(i,j)=Q.\ \alpha_1(i,j),\ \forall i,j$$

Cette proportion Q peut être fixée de façon empirique, par exemple à une valeur proche de ½.

La seconde contrainte peut alors s'écrire sous la forme :

$$\alpha_1(i,j) \cdot \left[ \sum_{k \in J_1(i,j)} \lambda_k + \sum_{k \in J_2(i,j)} \lambda_k + (Q-1) \cdot \sum_{k \in J_2(i,j)} \lambda_k \right] = HO(i,j)$$

Puisque

$$\sum_{k=J(i)} \lambda_k = t_i$$

et que $J_1(i,j) \cup J_2(i,j)=J(i)$, cette expression peut encore s'écrire :

$$t_i + (Q-1)\cdot \sum_{k\in J_2(i,j)}\lambda_k = \frac{1}{\alpha_1(i,j)}\cdot HO(i,j)$$

On pose $p_{ij}=\frac{1}{\alpha_1(i,j)}$, en supposant que la probabilité qu'un mobile effectue un basculement, dans une zone de type « $\alpha_1$ » (c'est-à-dire à proximité d'une autre cellule) n'est pas nulle.

Et on obtient alors l'expression de la seconde contrainte :

$$(Q-1)\cdot \sum_{k\in J_2(i,j)}\lambda_k - p_{ij}\cdot HO(i,j) = -t_i$$

Afin de tenir compte du fait que les probabilités sont inconnues, il faut modifier l'expression du critère à minimiser. Ce critère f devient désormais une fonction des valeurs de trafic $\lambda_i$ et des probabilités de basculement $\alpha_1(i,j)$.

On écrit par exemple :

$$S(\Lambda, A) = \sum_{i=1}^{n}\nabla_i + \sum_{i=1}^{n}\sum_{j\in V(i)}\left[\frac{t_i}{HO(i,j)} - p_{ij}\right]^2$$

avec $\Lambda=(\lambda_1, \lambda_2, \lambda_3... \lambda_n)$ et $A=[\alpha_1(1,1) ; \alpha_1(1,2)...\alpha_1(1,V(1)) ; \alpha_1(2,1) ; \alpha_1(2,2)... \alpha_1(2,V(2)) ... \alpha_1(n,1) ; \alpha_1(n,V(n))]$

Ce critère peut être minimisé, sous les contraintes précédemment données, selon les méthodes de l'état de la technique, comme celles énoncées précédemment.

## Revendications

1. Procédé pour construire une représentation de la répartition géographique du trafic pour un réseau cellulaire de radiocommunication, **caractérisé en ce qu'**il comporte des étapes visant à :

   - Diviser chaque cellule dudit réseau cellulaire en un ensemble de zones ($z_1, z_2, z_3... z_9$), à l'aide d'informations sur les basculements provenant dudit réseau cellulaire,
   - Déterminer une valeur de trafic ($\lambda_1, \lambda_2, \lambda_3... \lambda_n$) pour chacune desdites zones,
   - Déterminer une représentation de la répartition géographique du trafic à partir desdites valeurs de trafic.

2. Procédé selon la revendication précédente, dans lequel la valeur de trafic d'une zone dépend de la probabilité de basculement ($\alpha_1, \alpha_2$) associée à cette zone.

3. Procédé selon la revendication précédente, dans laquelle lesdites probabilités de basculement sont calculées conjointement au calcul desdites valeurs de trafic, par une méthode d'optimisation sous contraintes.

4. Procédé selon l'une des revendications précédentes, dans lequel l'étape de division de chaque cellule est composée des sous-étapes suivantes :

   - acquisition des frontières des basculements entrants à partir des cartes de meilleurs serveurs, fournies par un système de gestion (OMC),
   - calcul des frontières des basculements sortants à partir desdites frontières des basculements entrants, lesdites frontières des basculements sortants formant les frontières desdites zones.

# FIG_1

# FIG_2

## FIG_3

## FIG_4

**Office européen des brevets**

# RAPPORT DE RECHERCHE EUROPEENNE

Numéro de la demande

EP 01 40 1494

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 044 273 A (TEKINAY) 28 mars 2000 (2000-03-28) * abrégé; figures 2,6-9B * * colonne 5, ligne 18 - colonne 6, ligne 17 * | 1 | H04Q7/34 H04M3/36 |
| A | US 5 828 962 A (HO-A-CHUCK) 27 octobre 1998 (1998-10-27) * abrégé; figures 2-7 * * colonne 5, ligne 11 - ligne 59 * | 1 | |
| A | US 5 465 289 A (KENNEDY,JR.) 7 novembre 1995 (1995-11-07) * figures 4A-4C * * colonne 4, ligne 58 - colonne 6, ligne 2 * | 1 | |
| A | US 5 465 390 A (COHEN) 7 novembre 1995 (1995-11-07) * abrégé * * colonne 9, ligne 53 - ligne 56 * * colonne 19, ligne 19 - colonne 20, ligne 33 * | 1 | |
| A | WO 97 01941 A (TELEFONAKTIEBOLAGET LM ERICSSON) 16 janvier 1997 (1997-01-16) * abrégé; figures 2-5 * * colonne 8, ligne 31 - colonne 9, ligne 27 * | 1 | DOMAINES TECHNIQUES RECHERCHES (Int.Cl.7) H04Q H04M |
| A | WO 97 50272 A (NORTHERN TELECOM LTD.) 31 décembre 1997 (1997-12-31) * revendication 18 * | 1 | |

Le présent rapport a été établi pour toutes les revendications

| Lieu de la recherche | Date d'achèvement de la recherche | Examinateur |
|---|---|---|
| BERLIN | 14 septembre 2001 | Danielidis, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 40 1494

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-09-2001

| Document brevet cité au rapport de recherche | | Date de publication | Membre(s) de la famille de brevet(s) | | Date de publication |
|---|---|---|---|---|---|
| US 6044273 | A | 28-03-2000 | AUCUN | | |
| US 5828962 | A | 27-10-1998 | FR | 2747874 A | 24-10-1997 |
| | | | BR | 9708698 A | 04-01-2000 |
| | | | CA | 2252006 A | 23-10-1997 |
| | | | CN | 1216667 A | 12-05-1999 |
| | | | EP | 0894412 A | 03-02-1999 |
| | | | WO | 9739598 A | 23-10-1997 |
| | | | PL | 329334 A | 29-03-1999 |
| US 5465289 | A | 07-11-1995 | US | 5559864 A | 24-09-1996 |
| US 5465390 | A | 07-11-1995 | FR | 2687520 A | 20-08-1993 |
| | | | DE | 69307159 D | 20-02-1997 |
| | | | DE | 69307159 T | 07-08-1997 |
| | | | EP | 0556146 A | 18-08-1993 |
| | | | JP | 6085733 A | 25-03-1994 |
| WO 9701941 | A | 16-01-1997 | FI | 953225 A | 30-12-1996 |
| | | | AU | 6227596 A | 30-01-1997 |
| | | | EP | 0846401 A | 10-06-1998 |
| | | | NO | 976100 A | 23-02-1998 |
| | | | RU | 2147795 C | 20-04-2000 |
| WO 9750272 | A | 31-12-1997 | US | 5890067 A | 30-03-1999 |
| | | | AU | 7615096 A | 14-01-1998 |
| | | | CA | 2258889 A | 31-12-1997 |
| | | | EP | 0908070 A | 14-04-1999 |

EPO FORM P0460

Pour tout renseignement concernant cette annexe : voir Journal Officiel de l'Office européen des brevets, No.12/82